(19) Europäisches Patentamt
European Patent Office
Office européen des brevets

(11) **EP 3 193 457 A1**

(12) **EUROPEAN PATENT APPLICATION**

(43) Date of publication:
**19.07.2017 Bulletin 2017/29**

(51) Int Cl.:
*H04B 1/525* (2015.01)          *H04B 1/12* (2006.01)

(21) Application number: **17150680.1**

(22) Date of filing: **09.01.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **18.01.2016 JP 2016007259**

(71) Applicant: **FUJITSU LIMITED**
**Kawasaki-shi Kanagawa 211-8588 (JP)**

(72) Inventors:
• **AOKI, Nobuhisa**
  **Kawasaki-shi, Kanagawa 211-8588 (JP)**

• **KAWASAKI, Toshio**
  **Kawasaki-shi, Kanagawa 211-8588 (JP)**
• **MANIWA, Toru**
  **Kawasaki-shi, Kanagawa 211-8588 (JP)**
• **SATO, Tadahiro**
  **Kawasaki-shi, Kanagawa 211-8588 (JP)**
• **TOBISU, Yusuke**
  **Kawasaki-shi, Kanagawa 211-8588 (JP)**
• **TOWATA, Hiroshi**
  **Fukuoka-shi, Fukuoka 814-8588 (JP)**

(74) Representative: **Cooper-Rolfe, Elizabeth Louise**
**Haseltine Lake LLP**
**Lincoln House, 5th Floor**
**300 High Holborn**
**London WC1V 7JH (GB)**

(54) **DISTORTION CANCELLATION DEVICE AND DISTORTION CANCELLATION METHOD**

(57) A distortion cancellation device includes a first acquiring unit that acquires a plurality of transmission signals that are wirelessly transmitted at different frequencies; a second acquiring unit that acquires a reception signal to which an intermodulation signal generated due to the plurality of the transmission signals is added; and a processor that executes a process including acquiring a gain difference between the plurality of the transmission signals generated when the plurality of the transmission signals acquired by the first acquiring unit is sent to a generation source of the intermodulation signal, generating, by an arithmetic expression using both the acquired gain difference and the plurality of the transmission signals, a cancellation signal associated with the intermodulation signal, and combining the generated cancellation signal with the reception signal acquired by the second acquiring unit.

FIG.3

**Description**

FIELD

The embodiments discussed herein are related to a distortion cancellation device and a distortion cancellation method.

BACKGROUND

In recent years, with the aim of improving the throughput in radio communication systems, for example, technologies, such as carrier aggregation, Multiple Input Multiple Output (MIMO), or the like, are introduced. Carrier aggregation is a technology in which base station devices and radio terminal devices perform communication by using multiple carriers at different frequencies. Furthermore, MIMO is a technology in which a transmission side transmits different pieces of data from each of a plurality of transmission antennas and a reception side separates the pieces of data transmitted from each of the transmission antennas on the basis of reception signals in a plurality of reception antennas.

Because these technologies are introduced, various signals having different frequencies are transmitted inside and outside the radio communication devices, such as the base station devices, the radio terminal devices, and the like. Furthermore, if, for example, a distortion generation source, such as a metal or the like, is present on the transmission paths of these signals, an intermodulation signal is generated due to intermodulation between these signals having different frequencies. Namely, an intermodulation signal having the frequency equal to the sum or the difference of multiples of the frequencies of these signals is generated in the distortion generation source. Then, if the frequency of the intermodulation signal is included in the reception frequency band of the radio communication device, the demodulation and the decoding of the reception signal are inhibited by the intermodulation signal and thus the reception quality is decreased.

In order to reduce a decrease in the reception quality due to such an intermodulation signal, studies have been conducted on a method of, for example, approximately regenerating an intermodulation signal due to intermodulation between a transmission signal transmitted from a radio communication device and an interference signal transmitted from another radio communication device and cancelling out the intermodulation signal that is included in a reception signal.

Patent Document 1: Japanese National Publication of International Patent Application No. 2009-526442

An intermodulation signal generated from a plurality of signals having different frequencies can be regenerated by an arithmetic operation. However, because many coefficients are included in an arithmetic expression that is used to obtain the intermodulation signal, there is a problem in that the processing load of calculating the intermodulation signal is great and the size of a circuit of a device is increased.

Specifically, the intermodulation signal generated from a plurality of signals having different frequencies includes odd order inter modulation distortion, such as the third-order distortion, the fifth-order distortion, or the like, and even order inter modulation distortion, such as the second-order distortion, the fourth order distortion, or the like. In particular, in the intermodulation signal included in the reception frequency band, the odd order inter modulation distortion, such as the third-order distortion, the fifth-order distortion, or the like, is sometimes included. Furthermore, because a large number of coefficients are included in an arithmetic expression that is used for calculation as the distortion becomes higher-order intermodulation distortion, the amount of the processing is increased when an intermodulation signal is calculated by considering the higher-order inter modulation distortion. Consequently, if a replica of an effective intermodulation signal is generated by reflecting the actual communication status in the radio communication system, a lot of arithmetic processing is needed.

Accordingly, it is desirable to provide a distortion cancellation device and a distortion cancellation method that can reduce an increase in the amount of an arithmetic processing and decrease the size of a circuit.

SUMMARY

According to an embodiment of one aspect of the invention, a distortion cancellation device includes a first acquiring unit that acquires a plurality of transmission signals that are wirelessly transmitted at different frequencies; a second acquiring unit that acquires a reception signal to which an intermodulation signal generated due to the plurality of the transmission signals is added; and a processor that executes a process including acquiring a gain difference between the plurality of the transmission signals generated when the plurality of the transmission signals acquired by the first acquiring unit is sent to a generation source of the intermodulation signal, generating, by an arithmetic expression using both the acquired gain difference and the plurality of the transmission signals, a cancellation signal associated with the intermodulation signal, and combining the generated cancellation signal with the reception signal acquired by the second acquiring unit.

BRIEF DESCRIPTION OF DRAWINGS

The invention is described, by way of example only, with reference to the following drawings, in which:

FIG. 1 is a block diagram illustrating the configuration of a radio communication system according to a first embodiment;
FIG. 2 is a schematic diagram illustrating a specific example of the number of coefficients of cancellation Equation;
FIG. 3 is a block diagram illustrating the function of a processor according to the first embodiment;
FIG. 4 is a schematic diagram illustrating a circuit example of a cancellation equation generating unit according to the first embodiment;
FIG. 5 is a flowchart illustrating a distortion cancellation process according to the first embodiment;
FIG. 6 is a schematic diagram illustrating the number of coefficients of cancellation Equation according to the first embodiment;
FIG. 7 is a schematic diagram illustrating a circuit example of a cancellation equation generating unit according to a second embodiment;
FIG. 8 is a schematic diagram illustrating another circuit example of the cancellation equation generating unit according to the second embodiment;
FIG. 9 is a block diagram illustrating the function of a processor according to a third embodiment;
FIG. 10 is a flowchart illustrating a distortion cancellation process according to the third embodiment;
FIG. 11 is a block diagram illustrating the function of a processor according to a fourth embodiment; and
FIG. 12 is a flowchart illustrating a gain difference adjusting process according to the fourth embodiment.

DESCRIPTION OF EMBODIMENTS

Preferred embodiments of the present invention will be explained with reference to accompanying drawings. The present invention is not limited to the embodiments.

[a] First Embodiment

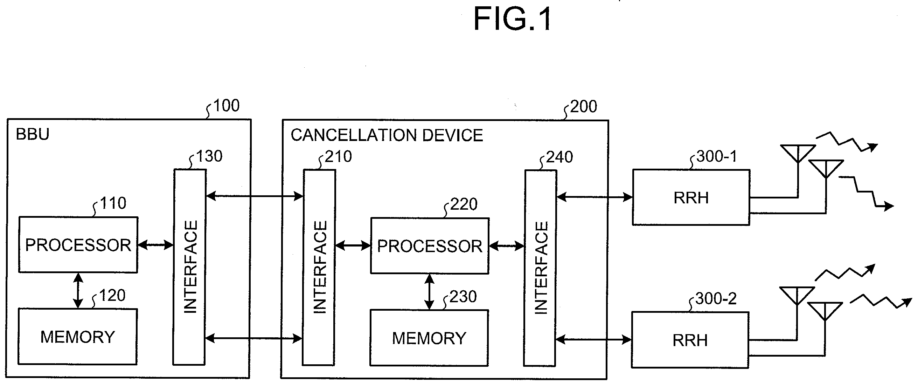

FIG. 1 is a block diagram illustrating the configuration of a radio communication system according to a first embodiment. The radio communication system illustrated in FIG. 1 includes a baseband unit (hereinafter, simply referred to as a "BBU") 100, a cancellation device 200, and remote radio heads (hereinafter, simply referred to as "RRHs") 300-1 and 300-2. Furthermore, in FIG. 1, two RRHs 300-1 and 300-2 are illustrated; however, a single RRH or three or more RRHs may also be connected to the cancellation device 200.

The BBU 100 performs a baseband process and transmits a baseband signal including transmission data to the cancellation device 200. Furthermore, the BBU 100 receives a baseband signal including reception data from the cancellation device 200 and performs the baseband process on the subject baseband signal. Specifically, the BBU 100 includes a processor 110, a memory 120, and an interface 130.

The processor 110 includes, for example, a central processing unit (CPU), a field programmable gate array (FPGA), a digital signal processor (DSP), or the like and generates a transmission signal transmitted from each of the RRHs 300-1 and 300-2. In the embodiment, the RRH 300-1 transmits transmission signals at different frequencies f1 and f2 from two antennas, whereas the RRH 300-2 transmits transmission signals at different frequencies f3 and f4 from two antennas. Consequently, the processor 110 generates transmission signals Tx1 and Tx2 transmitted from the two antennas in the RRH 300-1 and generates transmission signals Tx3 and Tx4 transmitted from the two antennas in the RRH 300-2. Furthermore, the processor 110 obtains the reception data from the reception signals received by the RRHs 300-1 and 300-2.

The memory 120 includes, for example, a random access memory (RAM), a read only memory (ROM), or the like and stores therein information that is used by the processor 110 to perform a process.

The interface 130 is connected to the cancellation device 200 by, for example, an optical fiber or the like and transmits and receives a baseband signal to and from the cancellation device 200. The transmission signals Tx1, Tx2, Tx3, and Tx4 are included in the baseband signal transmitted by the interface 130.

The cancellation device 200 is connected between the BBU 100 and the RRHs 300-1 and 300-2 and relays the baseband signal that is transmitted and received between the BBU 100 and the RRHs 300-1 and 300-2. Furthermore, the cancellation device 200 generates, on the basis of the transmission signals Tx1, Tx2, Tx3, and Tx4, a cancellation signal associated with the intermodulation signal and combines the reception signal with the cancellation signal. Furthermore, in the embodiment, it is assumed that an intermodulation signal is generated due to the distortion generation source being irradiated with the transmission signals Tx1 and Tx2 and the frequency of the subject intermodulation signal is included in the reception frequency bands of the RRHs 300-1 and 300-2. Namely, the cancellation device 200 cancels the intermodulation signal, which is generated due to intermodulation of the transmission signals Tx1 and Tx2, from the reception signal. Specifically, the cancellation device 200 includes interfaces 210 and 240, a processor 220, and a memory 230.

The interface 210 is connected to the BBU 100 and transmits and receives the baseband signal to and from the BBU 100. Namely, the interface 210 receives, from the interface 130 in the BBU 100, the transmission signals generated by the processor 110 and, in contrast, transmits, to the interface 130 in the BBU 100, the reception signals received by the RRHs 300-1 and 300-2.

The processor 220 includes, for example, a CPU, an FPGA, a DSP, or the like and generates, on the basis of the plurality of transmission signals received by the interface 210, a cancellation signal that is used to cancel an intermodulation signal. Furthermore, the processor 220 combines the cancellation signal with the reception signal received by the interface 240 and cancels the intermodulation signal that is added to the reception signal. The function of the processor 220 will be described in detail later.

The memory 230 includes, for example, a RAM, a ROM, or the like and stores therein information that is used by the processor 220 to perform a process. Namely, the memory 230 stores therein, for example, the parameter that is used when the processor 220 generates a cancellation signal.

The interface 240 is connected to the RRHs 300-1 and 300-2 by, for example, an optical fiber or the like and transmits and receives the baseband signals to and from the RRHs 300-1 and 300-2. Namely, the interface 240 transmits the transmission signals received from the BBU 100 to the RRHs 300-1 and 300-2 and, in contrast, receives the reception signals received by the RRHs 300-1 and 300-2 from the RRHs 300-1 and 300-2, respectively. The intermodulation signal generated due to intermodulation of the signal having the frequency f1 and the signal having the frequency f2 is added to the reception signals received by the interface 240 from the RRHs 300-1 and 300-2.

The RRHs 300-1 and 300-2 up-convert the baseband signals received from the cancellation device 200 to each of the radio frequencies f1 to f4 and transmit the signals via the antennas. Namely, the RRH 300-1 up-converts the transmission signals Tx1 and Tx2 to the frequencies f1 and f2, respectively, and transmits the signals via the antennas. Then, the RRH 300-2 up-converts the transmission signals Tx3 and Tx4 to the frequencies f3 and f4, respectively, and transmits the signals via the antennas. Furthermore, the RRHs 300-1 and 300-2 down-convert the reception signals received via the antennas to the baseband frequency and transmit the signals to the cancellation device 200. The intermodulation signal generated due to intermodulation of the signals having the frequencies f1 and f2 described above is added to the reception signals that are received by the RRHs 300-1 and 300-2.

As described above, the processor 220 in the cancellation device 200 generates a cancellation signal of the intermodulation signal that is generated due to intermodulation of the transmission signals Tx1 and Tx2. The cancellation signal is a replica of the intermodulation signal generated due to a plurality of transmission signals and, for example, cancellation Equation (1) below can be used for the generation. However, Equation (1) is an equation for generating, if a frequency (2f1-f2) is included in the reception frequency band, a cancellation signal C that cancels the third-order distortion, the fifth-order distortion, and the seventh-order distortion in the subject reception frequency band.

$$C = \{ p_{11} |Tx1|^4 + p_{21} |Tx1|^2 |Tx2|^2 + p_{31} |Tx2|^4$$

$$+ p_{41} |Tx1|^2 + p_{51} |Tx2|^2$$

$$+ p_{61} \} \cdot Tx1 \cdot Tx1 \cdot conj(Tx2) \qquad\qquad (1)$$

In Equation (1), $p_{11}$ to $p_{61}$ represent predetermined coefficients and conj(x) represents the complex conjugate of x. In cancellation Equation (1), six coefficients, i.e., $p_{11}$ to $p_{61}$, are included and, when the cancellation signal C is calculated by using the cancellation Equation (1), the cancellation signal C is calculated after these six coefficients have been obtained.

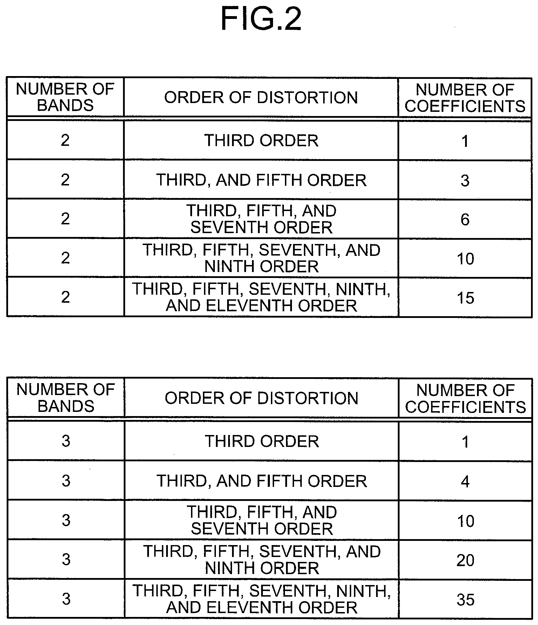

FIG. 2 is a schematic diagram illustrating a specific example of the number of coefficients of cancellation Equation. Because Equation (1) above is the cancellation Equation for obtaining the third-order distortion, the fifth-order distortion, and the seventh-order distortion generated due to the transmission signals having the two bands of the frequencies f1 and f2, the number of coefficients is six. As for also the other conditions, when referring to FIG. 2, it is found that the number of coefficients is increased as the number of bands and the order of distortion to be considered is increased, which makes it difficult to calculate a cancellation signal using the cancellation Equation.

In this way, a large number of coefficients are included in the cancellation Equation and thus the arithmetic processing for calculating a cancellation signal tends to be complex. Thus, the processor 220 according to the embodiment obtains a gain difference of the amplitude and the phase between the transmission signals Tx1 and Tx2 having different frequencies to the distortion generation source in a transmission path and generates a cancellation Equation using the gain difference. Namely, the processor 220 obtains a gain difference a, in the distortion generation source, that satisfies Equation (2) below and generates cancellation Equation (3) by transforming Equation (1) above by using the gain difference a.

$$Tx1 = a \cdot Tx2 \tag{2}$$

$$C = \{ S_7/32 \cdot (21|Tx1|^4 + 70 \cdot a^2 \cdot |Tx1|^2|Tx2|^2 + 63 \cdot a^4 \cdot |Tx2|^4)$$

$$+ S_5/8 \cdot (5|Tx1|^2 + 10 \cdot a^2 \cdot |Tx2|^2)$$

$$+ S_3 \cdot 3/4 \} \cdot Tx1 \cdot Tx1 \cdot conj(a \cdot Tx2) \tag{3}$$

where, in Equation (3) above, the gain difference a represents the gain difference between the transmission signals to the distortion generation source in the transmission path and includes the amplitude component and the phase component. Furthermore, $S_3$, $S_5$, $S_7$ represent coefficients of the third-order distortion, the fifth-order distortion, and the seventh-order distortion, respectively. Accordingly, when the cancellation Equation (1) is used, the cancellation signal C is calculated after the six coefficients $p_{11}$ to $p_{61}$ have been obtained, whereas, when cancellation Equation (3) is used, the cancellation signal C is calculated if the three coefficients $S_3$, $S_5$, and $S_7$ are obtained. Consequently, it is found that the amount of the arithmetic processing can be reduced by using the cancellation Equation (3). In the following, generating the cancellation Equation using such a gain difference will specifically be described.

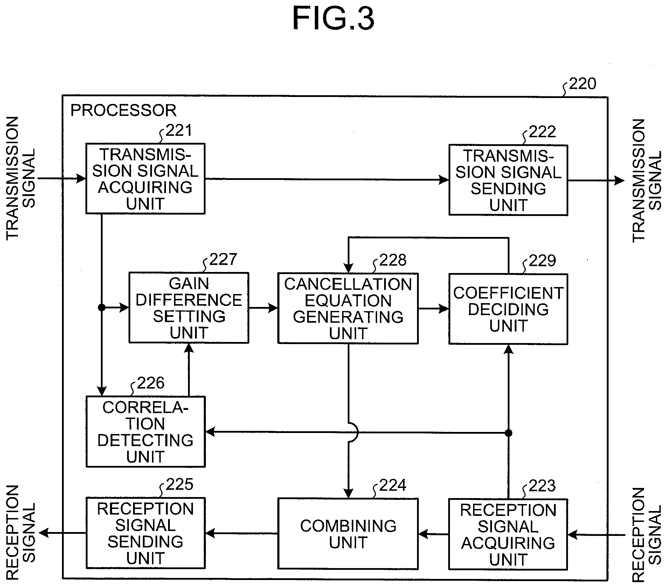

FIG. 3 is a block diagram illustrating the function of the processor 220 according to the first embodiment. The processor 220 illustrated in FIG. 3 includes a transmission signal acquiring unit 221, a transmission signal sending unit 222, a reception signal acquiring unit 223, a combining unit 224, a reception signal sending unit 225, a correlation detecting unit 226, a gain difference setting unit 227, a cancellation equation generating unit 228, and a coefficient deciding unit 229.

The transmission signal acquiring unit 221 acquires the transmission signals received from the BBU 100 by the interface 210. Namely, the transmission signal acquiring unit 221 acquires the transmission signals Tx1, Tx2, Tx3, and Tx4.

The transmission signal sending unit 222 sends the transmission signals acquired by the transmission signal acquiring unit 221 to the RRHs 300-1 and 300-2 via the interface 240. Specifically, the transmission signal sending unit 222 sends the transmission signals Tx1 and Tx2 to the RRH 300-1 and sends the transmission signals Tx3 and Tx4 to the RRH 300-2.

The reception signal acquiring unit 223 acquires the reception signals received by the interface 240 from the RRHs 300-1 and 300-2. The intermodulation signal generated due to intermodulation of the transmission signals Tx1 and Tx2 is added to the reception signals that are acquired by the reception signal acquiring unit 223.

The combining unit 224 combines the cancellation signal that is generated by the cancellation equation generating unit 228 using the cancellation Equation with the reception signal. Namely, the combining unit 224 cancels the intermodulation signal by combining the cancellation signal with the reception signal to which the intermodulation signal is added.

The reception signal sending unit 225 sends the reception signal in which the intermodulation signal has been canceled to the BBU 100 via the interface 210.

The correlation detecting unit 226 detects the correlation between the transmission signal and the reception signal and calculates, on the basis of a correlation value, a gain difference between the plurality of transmission signals that generates the intermodulation signal. Specifically, the correlation detecting unit 226 calculates a correlation value between the reception signal and each of the inter modulation distortion components related to the respective transmission signals. Namely, $Tx1 \cdot Tx1 \cdot conj(Tx2)$ is present as the inter modulation distortion component of the frequency (2f1-f2) generated from the transmission signals Tx1 and Tx2. Accordingly, the correlation detecting unit 226 detects the correlation value of the reception signal related to the following inter modulation distortion components that are based on the amplitude of each of the transmission signals Tx1 and Tx2.

$$|Tx1|^2 \cdot Tx1 \cdot Tx1 \cdot conj(Tx2)$$

$$|Tx2|^2 \cdot Tx1 \cdot Tx1 \cdot conj(Tx2)$$

Then, the correlation detecting unit 226 calculates the gain difference a between the transmission signals Tx1 and Tx2 by taking the ratio of the detected correlation values. Namely, the gain difference a is calculated by Equation (4) below.

$$a = \{corr(|Tx2|^2 \cdot Tx1 \cdot Tx1 \cdot conj(Tx2))/corr(|Tx1|^2 \cdot Tx1 \cdot Tx1 \cdot conj(Tx2))\}^{1/2} \qquad (4)$$

where, in Equation (4), corr(x) represents the correlation value between x and the reception signal. The correlation detecting unit 226 notifies the gain difference setting unit 227 of the calculated gain difference a.

The gain difference setting unit 227 sets the gain difference to the transmission signal that generates the intermodulation signal. Namely, the gain difference setting unit 227 multiplies the gain difference a by the transmission signal Tx2 out of the transmission signals Tx1 and Tx2. Then, the gain difference setting unit 227 outputs the transmission signal Tx1 and the transmission signal Tx2 in which the gain difference a has been multiplied to the cancellation equation generating unit 228.

The cancellation equation generating unit 228 generates a cancellation Equation for generating a cancellation signal from the transmission signals Tx1 and Tx2 in which the gain difference is set. Specifically, the cancellation equation generating unit 228 generates Equation (3) above. Furthermore, if the coefficient of the cancellation Equation is decided by the coefficient deciding unit 229, the cancellation equation generating unit 228 outputs the cancellation signal that is generated by the cancellation Equation to the combining unit 224.

The coefficient deciding unit 229 decides the coefficients included in the cancellation Equation by using, for example, a method of least squares or the like. Namely, the coefficient deciding unit 229 decides the coefficients $S_3$, $S_5$, and $S_7$ included in Equation (3) above by the method of least squares or the like that uses the reception signal. Furthermore, the coefficient deciding unit 229 may also decide the coefficients $S_3$, $S_5$, and $S_7$ that maximize the correlation between, for example, the cancellation signal and the reception signal. Then, the coefficient deciding unit 229 notifies the cancellation equation generating unit 228 of the decided coefficients $S_3$, $S_5$, and $S_7$.

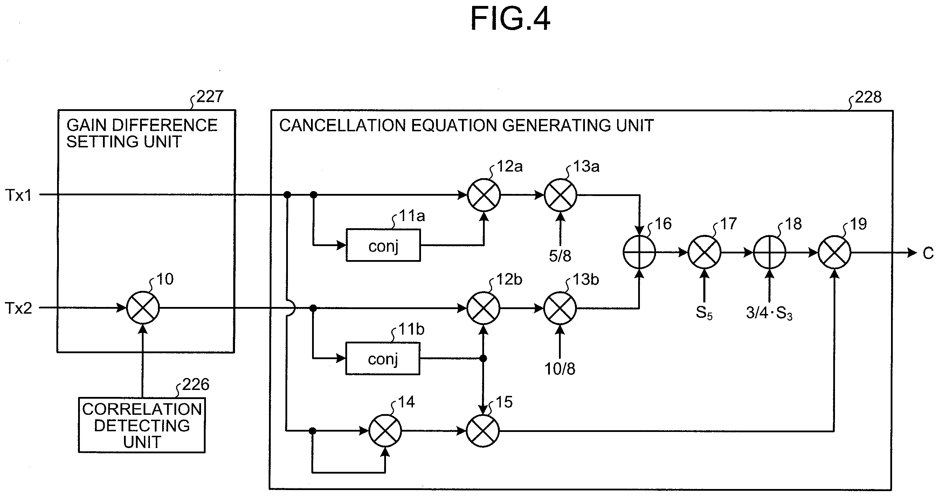

FIG. 4 is a schematic diagram illustrating a circuit example of the cancellation equation generating unit 228 according to the first embodiment. In FIG. 4, the circuit portion related to the third-order distortion and the fifth-order distortion is illustrated and the circuit portion related to the seventh-order distortion or more is not illustrated.

As illustrated in FIG. 4, in the gain difference setting unit 227, the gain difference a is multiplied by the transmission signal Tx2 by a multiplier 10. Then, both the transmission signal Tx1 and the transmission signal Tx2 in which the gain difference a has been multiplied are input to the cancellation equation generating unit 228.

Each of conjs 11a and 11b calculates the complex conjugate of the input signal. Each of multipliers 12a and 12b calculates the square of the size of the input signal by multiplying the input signal by the output signal from each of the conjs 11a and 11b. Each of the multipliers 13a and 13b multiplies each of the constants by each of the multiplication results of the multipliers 12a and 12b. The multiplication results obtained by the multipliers 13a and 13b are added by an adder 16, whereby the portion related to the fifth-order distortion in the cancellation Equation (3) is calculated. Namely, the addition result of the adder 16 is the portion that is multiplied by the coefficient $S_5$ in Equation (3) above.

A multiplier 17 multiplies the coefficient $S_5$ by the portion that is related to the fifth-order distortion that is output from the adder 16 and then outputs the portion of the fifth-order distortion. Then, an adder 18 adds the portion of the third-order distortion in cancellation Equation (3) to the multiplication result obtained by the multiplier 17. Namely, the portion of $S_3 \cdot 3/4$ in Equation (3) above is added to the portion of the fifth-order distortion and then the portion that depends on the order of the distortion in the cancellation Equation (3) is generated.

In contrast, a multiplier 14 calculates the square of the transmission signal Tx1 and a multiplier 15 multiplies the complex conjugate of the transmission signal Tx2 by the multiplication result obtained by the multiplier 14. Thus, the multiplication result obtained by the multiplier 15 is $Tx1 \cdot Tx1 \cdot conj(a \cdot Tx2)$ that is the inter modulation distortion component included in the cancellation Equation (3). This inter modulation distortion component is multiplied by the portion that depends on the order of distortion by a multiplier 19, whereby the cancellation Equation (3) is generated. Furthermore, after the coefficients $S_3$ and $S_5$ have been decided by the coefficient deciding unit 229, the multiplication result obtained by the multiplier 19 becomes the cancellation signal C.

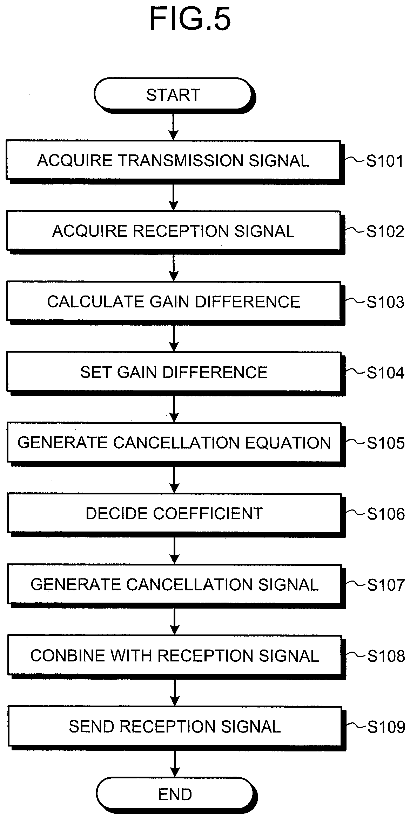

In the following, the distortion cancellation process performed by the cancellation device 200 configured as described above will be described with reference to the flowchart illustrated in FIG. 5. The distortion cancellation process described below is mainly performed by the processor 220 in the cancellation device 200.

The transmission signals Tx1, Tx2, Tx3, and Tx4 transmitted from the BBU 100 are acquired by the transmission signal acquiring unit 221 in the processor 220 via the interface 210 (Step S101). In contrast, the reception signals received by the RRHs 300-1 and 300-2 are acquired by the reception signal acquiring unit 223 in the processor 220 via the interface 240 (Step S102). The intermodulation signal due to intermodulation of each of the transmission signals Tx1 and Tx2 is added to the reception signals in the RRHs 300-1 and 300-2.

When the transmission signals and the reception signals are acquired, a gain difference between the transmission signals is calculated by the correlation detecting unit 226 (Step S103). Specifically, the correlation value between the inter modulation distortion component that is based on the amplitude of the transmission signal Tx1 and the reception signal is calculated by the correlation detecting unit 226 and the correlation value between the inter modulation distortion component that is based on the amplitude of the transmission signal Tx2 and the reception signal is calculated by the correlation detecting unit 226. The correlation values calculated here is the amplitude ratio of the inter modulation distortion components that are in the reception signal and that are related to the transmission signals Tx1 and Tx2. Then, the ratio of the calculated correlation values is calculated by the correlation detecting unit 226, whereby the gain difference between the transmission signals Tx1 and Tx2 to the distortion generation source in the transmission path is calculated.

When the gain difference between the transmission signals is calculated by the correlation detecting unit 226, the gain difference is set in each of the transmission signals by the gain difference setting unit 227 (Step S104) and the transmission signals in each of which the gain difference is set is notified to the cancellation equation generating unit 228. Specifically, for example, the gain difference $a(=|Tx2|/|Tx1|)$ is multiplied by the transmission signal Tx2 out of the transmission signals Tx1 and Tx2. Consequently, the transmission signals Tx1 and Tx2 in each of which the gain difference to the distortion generation source in the transmission path is reproduced are input to the cancellation equation generating unit 228.

Then, the cancellation Equation in which the gain difference is set and the transmission signal is used is generated by the cancellation equation generating unit 228 (Step S105). Namely, Equation (3) above is generated by the cancellation equation generating unit 228. Then, for example, a method of least squares or correlation detection using the reception signal is performed by the coefficient deciding unit 229, whereby the coefficient in the cancellation Equation is decided (Step S106). Here, the coefficients $S_3$, $S_5$, and $S_7$ in Equation (3) above are decided by the coefficient deciding unit 229.

If the coefficients are decided, because it is possible to generate the cancellation signal from the transmission signal by using the cancellation Equation, the cancellation signal is generated by the cancellation equation generating unit 228 (Step S107) and is output to the combining unit 224. Then, the cancellation signal is combined with the reception signal by the combining unit 224 (Step S108), whereby the intermodulation signal that is added to the reception signal is canceled. The reception signal in which the intermodulation signal has been canceled is output to the BBU 100 via the interface 210 by the reception signal sending unit 225 (Step S109).

In this way, when the third-order, the fifth-order, and the seventh-order distortion of the transmission signals Tx1 and Tx2 are considered, by setting the gain difference to the transmission signals Tx1 and Tx2, the cancellation signal of the intermodulation signal can be generated by using the cancellation Equation that includes therein only the three coefficients. Consequently, when compared with the case in which the cancellation signal is generated under the same condition by using Equation (1) above, it is possible to reduce the amount of an arithmetic processing and decrease the size of the circuit.

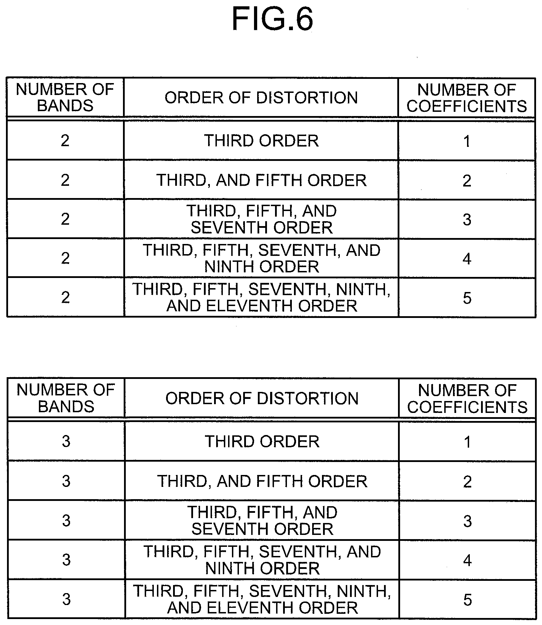

FIG. 6 is a schematic diagram illustrating the number of coefficients of each of the cancellation Equations each using a gain difference under the same condition as that illustrated in FIG. 2. As described above, when the third-order distortion, the fifth-order distortion, and the seventh-order distortion are obtained that are generated due to the transmission signal having two bands at the frequencies f1 and f2, six coefficients are included in the cancellation Equation (1), whereas only three coefficients are included in the cancellation Equation (3) using the gain difference. Furthermore, as can be seen by comparing FIG. 2 with FIG. 6, the number of coefficients included in the cancellation Equation can be significantly reduced as the order of the distortion to be considered is higher. Consequently, it is possible to reduce the amount of the processing, such as a process for deciding a coefficient in a cancellation Equation or a process for calculating a cancellation signal performed by using the cancellation Equation.

As described above, according to the embodiment, a gain difference between the transmission signals is obtained from the correlation value between a reception signal and each of the inter modulation distortion components related to each of the transmission signals and a cancellation Equation that is used to calculate a cancellation signal is generated by using the transmission signals in each of which the gain difference has been set. Consequently, it is possible to reduce the number of coefficients included in the cancellation Equation and it is possible to reduce an increase in the amount of an arithmetic processing and decrease the size of the circuit.

Furthermore, in the first embodiment described above, the correlation value between the inter modulation distortion component related to the transmission signal and the reception signal may also be periodically calculated by the correlation detecting unit 226 and the gain difference between the transmission signals may also be updated. Namely, the gain difference that is set by the gain difference setting unit 227 may also periodically be updated and, accordingly, the cancellation Equation may also periodically be updated.

[b] Second Embodiment

In the first embodiment described above, the case in which the intermodulation signal generated due to intermodulation of the transmission signals Tx1 and Tx2 from among the transmission signals Tx1 to Tx4 that are transmitted at four different frequencies f1 to f4 is canceled has been described. However, the intermodulation signal is also generated due to a combination of the other transmission signals and, if the distortion generation source is irradiated with the transmission signals Tx1 to Tx4, for example, an intermodulation signal with the frequency (f1+f2-f3) or the like is generated. Thus, in the second embodiment, a description will be given of distortion cancellation that cancels, if the distortion generation source is irradiated with the transmission signals Tx1 to Tx4 and the frequency (f1+f2-f3) is included in the reception frequency band, the intermodulation signal in this reception frequency band.

The configuration of a radio communication system according to the second embodiment is the same as that described in the first embodiment (FIG. 1); therefore, a description thereof will be omitted. Furthermore, the function of the processor 220 in a cancellation device according to the second embodiment is substantially the same as that described in the first embodiment (FIG. 3). However, the operation of each of the correlation detecting unit 226, the gain difference setting unit 227, and the cancellation equation generating unit 228 is different from that described in the first embodiment.

The correlation detecting unit 226 calculates the correlation value between the reception signal and each of the inter modulation distortion components related to each of the transmission signals. Namely, as the inter modulation distortion components of the frequency (f1+f2-f3) generated from the transmission signals Tx1 to Tx3, Tx1·Tx2·conj(Tx3) is present. Thus, the correlation detecting unit 226 detects the correlation value with the reception signal regarding the following inter modulation distortion components that are based on the amplitude of each of the transmission signals Tx1 to Tx4.

$$|Tx1|^2 \cdot Tx1 \cdot Tx2 \cdot conj(Tx3)$$

$$|Tx2|^2 \cdot Tx1 \cdot Tx2 \cdot conj(Tx3)$$

$$|Tx3|^2 \cdot Tx1 \cdot Tx2 \cdot conj(Tx3)$$

$$|Tx4|^2 \cdot Tx1 \cdot Tx2 \cdot conj(Tx3)$$

Then, by taking the ratio of the correlation value associated with the other transmission signals Tx2 to Tx4 by using the correlation value associated with , for example, the transmission signal Tx1 as the reference, the correlation detecting unit 226 calculates a gain difference between the transmission signal Tx1 and each of the transmission signals Tx2 to Tx4. The correlation detecting unit 226 notifies the gain difference setting unit 227 of the calculated gain difference.

The gain difference setting unit 227 multiplies each of the gain differences with respect to the transmission signal Tx1 by the transmission signals Tx2 to Tx4 from among the transmission signals Tx1 to Tx4. Then, the gain difference setting unit 227 outputs both the transmission signal Tx1 and the transmission signals Tx2 to Tx4 in which the gain difference a has been multiplied to the cancellation equation generating unit 228.

The cancellation equation generating unit 228 generates a cancellation Equation that is used to generate a cancellation signal from the transmission signals Tx1 to Tx4 in each of which the gain difference has been set. Specifically, the cancellation equation generating unit 228 generates Equation (5) below.

$$C=\{S_7/32\cdot(126|Tx1|^4+126\cdot b^4\cdot|Tx2|^4++126\cdot c^4\cdot|Tx3|^4+630\cdot d^4\cdot|Tx4$$

$$|^4$$

$$+280\cdot b^2\cdot|Tx1|^2|Tx2|^2+280\cdot c^2\cdot|Tx1|^2|Tx3|^2+840\cdot d^2\cdot|Tx1|^2|Tx4|^2$$

$$+280\cdot b^2\cdot c^2\cdot|Tx2|^2|Tx3|^2+840\cdot b^2\cdot d^2\cdot|Tx2|^2|Tx4|^2+840\cdot c^2\cdot d^2\cdot|Tx3|$$

$$^2|Tx4|^2)$$

$$+S_5/8\cdot(20|Tx1|^2+20\cdot b^2\cdot|Tx2|^2+20\cdot c^2\cdot|Tx3|^2+60\cdot d^2\cdot|Tx4|^2)$$

$$+S_3\cdot6/4\}\cdot Tx1\cdot b\cdot Tx2\cdot conj(c\cdot Tx3) \tag{5}$$

where, in Equation (5) above, b, c, and d represent the gain difference of each of the transmission signals Tx2 to Tx4 with respect to the transmission signal Tx1, whereas $S_3$, $S_5$, and $S_7$ represents coefficients of the third-order distortion, the fifth-order distortion, and the seventh-order distortion, respectively.

Furthermore, if the coefficients in the cancellation Equation are decided by the coefficient deciding unit 229, the cancellation equation generating unit 228 outputs the cancellation signal generated by the cancellation Equation to the combining unit 224.

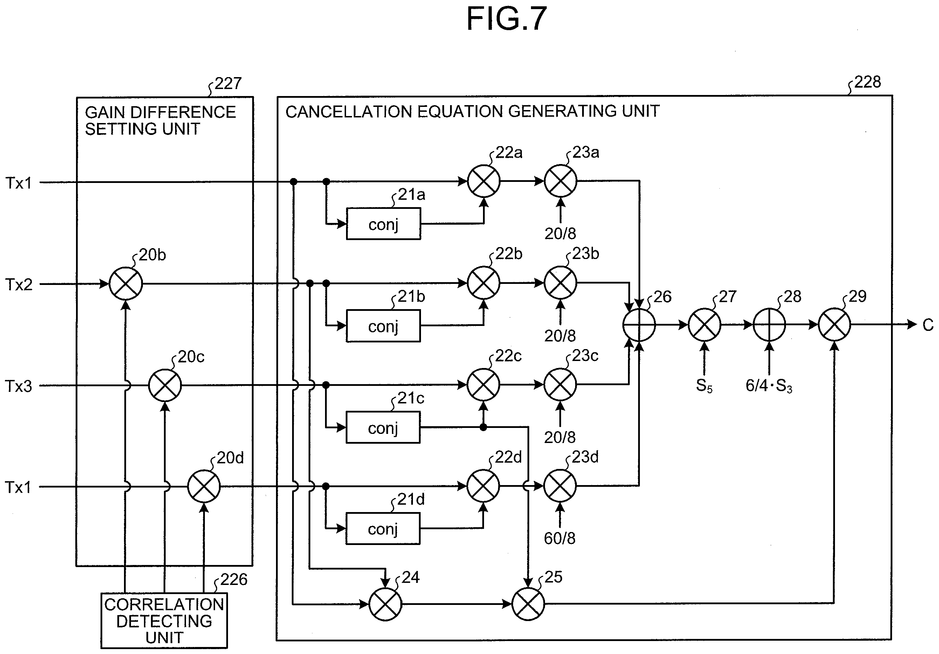

FIG. 7 is a schematic diagram illustrating a circuit example of the cancellation equation generating unit 228 according to a second embodiment. In FIG. 7, the circuit portion related to the third-order distortion and the fifth-order distortion is illustrated and the circuit portion related to the seventh-order distortion or more is not illustrated.

As illustrated in FIG. 7, in the gain difference setting unit 227, gain differences b, c, and d are multiplied by the transmission signals Tx2, Tx3, and Tx4 by multipliers 20b to 20d, respectively. Then, the transmission signal Tx1 and the transmission signals Tx2 to Tx4 in which the gain difference has been multiplied are input to the cancellation equation generating unit 228.

Each of conjs 21a to 21d calculates the complex conjugate of the input signal. Each of multipliers 22a to 22d calculates the square of the size of the input signal by multiplying the input signal by the output signal from the conjs 21a to 21d. Each of multipliers 23a to 23d multiplies each of the constants by the multiplication result obtained by each of the multipliers 22a to 22d. The multiplication results obtained by the multipliers 23a to 23d are added by an adder 26, whereby the portion related to the fifth-order distortion in cancellation Equation (5) is calculated. Namely, the addition result obtained by the adder 26 corresponds to the portion that is multiplied by the coefficient $S_5$ in Equation (5) above.

A multiplier 27 multiplies the coefficient $S_5$ by the portion related to the fifth-order distortion that is output from the adder 26 and then outputs the fifth-order distortion portion. Then, an adder 28 adds the third-order distortion in the cancellation Equation (5) to the multiplication result obtained by the multiplier 27. Namely, $S_3\cdot6/4$ in Equation (5) above is added to the portion of the fifth-order distortion and portion that depends the order of distortion in the cancellation Equation (5) is generated.

In contrast, a multiplier 24 multiplies the transmission signal Tx1 by the transmission signal Tx2 and a multiplier 25 multiplies the multiplication result obtained by the multiplier 24 by the complex conjugate of the transmission signal Tx3. Consequently, the multiplication result obtained by the multiplier 25 is $Tx1\cdot b\cdot Tx2\cdot conj(c\cdot Tx3)$ that is the inter modulation distortion component included in the cancellation Equation (5). This inter modulation distortion component is multiplied by the portion that depends on the order of distortion by a multiplier 29, whereby the cancellation Equation (5) is generated. Furthermore, after the coefficients $S_3$ and $S_5$ have been decided by the coefficient deciding unit 229, the multiplication result obtained by the multiplier 29 becomes the cancellation signal C.

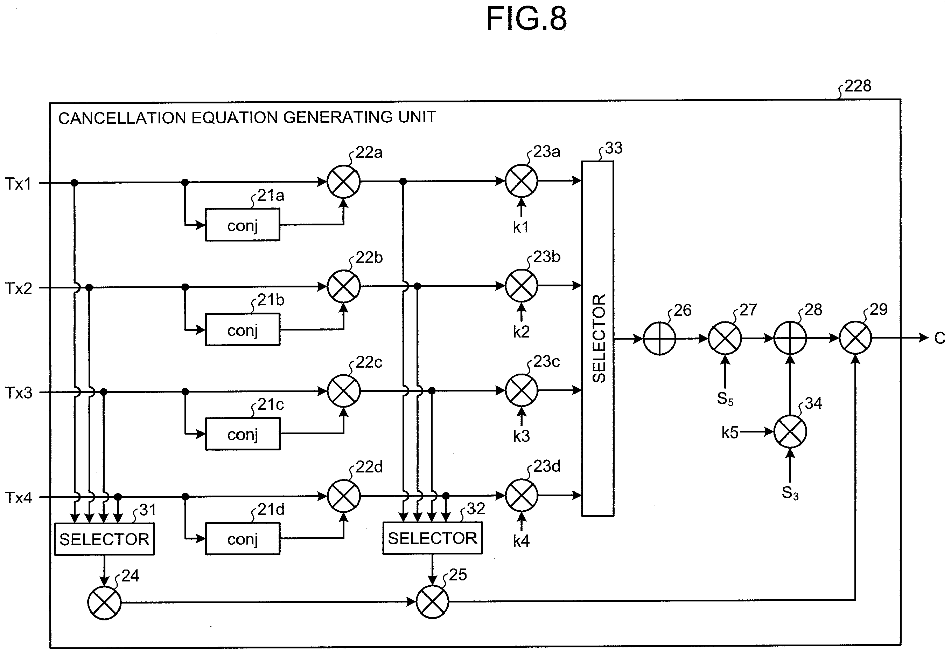

However, the circuit in the cancellation equation generating unit 228 can be configured to generate, by using, for example, a selector, cancellation Equation associated with intermodulation signals having various frequencies. FIG. 8 is a schematic diagram illustrating a circuit example of the cancellation equation generating unit 228 available for intermodulation signals having different frequencies. In FIG. 8, the circuit portion related to the third-order distortion and the fifth-order distortion is illustrated and the circuit portion related to the seventh-order distortion or more is not illustrated. Furthermore, in FIG. 8, components having the same configuration as those illustrated in FIG. 7 are assigned the same reference numerals.

A selector 31 selects, from among the transmission signals Tx1 to Tx4, the transmission signal that is included in the inter modulation distortion component and allows the multiplier 24 to perform multiplication. Namely, for example, if the distortion generation source is irradiated with the transmission signals Tx1 to Tx4 and a cancellation Equation associated with the intermodulation signal having the frequency (f1+f2-f3) is generated, selector 31 selects the transmission signals Tx1 and Tx2 having the frequencies f1 and f2, respectively and allows the multiplier 24 to perform multiplication. Furthermore, for example, as in the first embodiment described above, if the distortion generation source is irradiated with the transmission signals Tx1 and Tx2 and a cancellation Equation associated with the intermodulation signal having the frequency (2f1-f2) is generated, the selector 31 selects the transmission signal Tx1 having the frequency f1 and allows the multiplier 24 to calculate the square of the transmission signal Tx1. In this way, the selector 31 selects, in the frequency of the intermodulation signal, the transmission signal in which the frequency is added.

A selector 32 selects, from among the complex conjugates of the transmission signals Tx1 to Tx4, the complex conjugate of the transmission signal included in the inter modulation distortion component and allows the multiplier 25 to multiply the selected complex conjugate by the multiplication result obtained by the multiplier 24. Namely, for example, if the distortion generation source is irradiated with the transmission signals Tx1 to Tx4 and a cancellation Equation associated with the intermodulation signal having the frequency (f1+f2-f3) is generated, the selector 32 selects the complex conjugate of the transmission signal Tx3 having the frequency f3 and allows the multiplier 25 to multiply the product of the transmission signals Tx1 and Tx2 by the complex conjugate of the transmission signal Tx3. Furthermore, for example, in the first embodiment described above, if the distortion generation source is irradiated with the transmission signals Tx1 and Tx2 and a cancellation Equation associated with the intermodulation signal having the frequency (2f1-f2) is generated, the selector 32 selects the complex conjugate of the transmission signal Tx2 having the frequency f2 and allows the multiplier 25 to multiply the square of the transmission signal Tx1 by the complex conjugate of the transmission signal Tx2. In this way, in the frequency of the intermodulation signal, the selector 32 selects and acquires the complex conjugate of the transmission signal in which the frequency is subtracted.

A selector 33 selects, from among the transmission signals Tx1 to Tx4 in which the constants k1 to k4 is multiplied by the multipliers 23a to 23d, respectively, the transmission signal that is included in the portion that is multiplied by the coefficient $S_5$ of the fifth-order distortion. Namely, for example, if the distortion generation source is irradiated with the transmission signals Tx1 to Tx4 and a cancellation Equation associated with the intermodulation signal having the frequency (f1+f2-f3) is generated, the selector 33 selects the results obtained multiplying the square of the size of the transmission signals Tx1 to Tx4 by the constants k1 to k4, respectively. Furthermore, for example, in the first embodiment described above, if the distortion generation source is irradiated with the transmission signals Tx1 and Tx2 and a cancellation Equation associated with the intermodulation signal having the frequency (2f1-f2) is generated, the selector 33 selects the results obtained by multiplying the square of the size of the transmission signals Tx1 and Tx2 by the constants k1 and k2, respectively.

A multiplier 34 multiplies the constant k5 by the coefficient $S_3$ of the third-order distortion. The multiplication result obtained by the multiplier 34 is the portion of the third-order distortion in the cancellation Equation and is added, by the adder 28, to the portion of the fifth-order distortion that is output from the multiplier 27.

In this way, by configuring the cancellation equation generating unit 228 using the selectors 31 to 33, even if the frequencies of the intermodulation signals differ, the cancellation Equation associated with each of the intermodulation signals can be generated. Consequently, it is possible to flexibly cope with a change in the transmission frequency bands and the reception frequency bands in the radio communication system.

As described above, according to the embodiment, in also a case in which the distortion generation source is irradiated with the transmission signals Tx1 to Tx4 having the frequencies f1 to f4 and the intermodulation signal generated due to intermodulation of these transmission signals is added to the reception signal, a cancellation Equation is generated by using the transmission signals in each of which a gain difference is set. Consequently, it is possible to reduce the number of coefficients included in the cancellation Equation and it is possible to suppress an increase in the amount of an arithmetic processing and decrease in the size of the circuit.

[c] Third Embodiment

The characteristic of a third embodiment is that, if a gain difference between a plurality of transmission signals that generates the intermodulation signal is known, a cancellation Equation is generated by setting the known gain difference in the transmission signal.

In the first and second embodiments described above, it is assumed that the distortion generation source is mainly present outside the RRHs 300-1 and 300-2 and the intermodulation signal is generated in this distortion generation source. However, in also inside the RRHs 300-1 and 300-2, the distortion generation source, such as an antenna, a cable connected to the antenna, or the like, is present and the intermodulation signal is also generated in this distortion generation source. Furthermore, if the intermodulation signal is generated inside the RRHs 300-1 and 300-2, the gain of each of the transmission signals to the distortion generation source is the same or the gain difference is known. Thus, in the third embodiment, a description will be given of distortion cancellation that cancels the intermodulation signal generated in the distortion generation source that is inside the device. Specifically, a description will be given of a case of cancelling the intermodulation signal generated due to intermodulation of the transmission signals Tx1 and Tx2 inside the RRH 300-1.

The configuration of a radio communication system according to a third embodiment is the same as that described in the first embodiment (FIG. 1); therefore, a description thereof will be omitted. In the third embodiment, the function of the processor 220 in the cancellation device is different from that in the first embodiment.

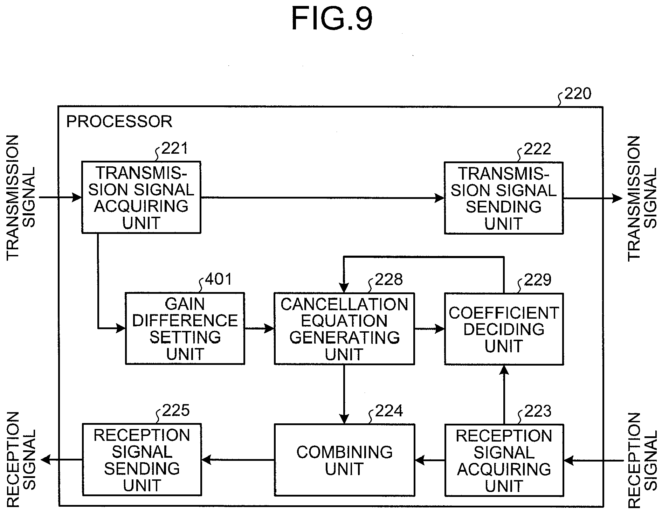

FIG. 9 is a block diagram illustrating the function of the processor 220 according to a third embodiment. In FIG. 9, components having the same configuration as those illustrated in FIG. 3 are assigned the same reference numerals and descriptions thereof will be omitted. In the processor 220 illustrated in FIG. 9, the correlation detecting unit 226 and the gain difference setting unit 227 in the processor 220 illustrated in FIG. 3 is changed to a gain difference setting unit 401.

The gain difference setting unit 401 sets the known gain difference in the transmission signal that generates the intermodulation signal. Namely, the gain difference setting unit 401 acquires the known gain difference a stored in, for example, the memory 230 and multiplies the gain difference a by the transmission signal Tx2 out of the transmission signals Tx1 and Tx2. Then, the gain difference setting unit 401 outputs the transmission signal Tx1 and the transmission signal Tx2 in which the gain difference a is multiplied to the cancellation equation generating unit 228.

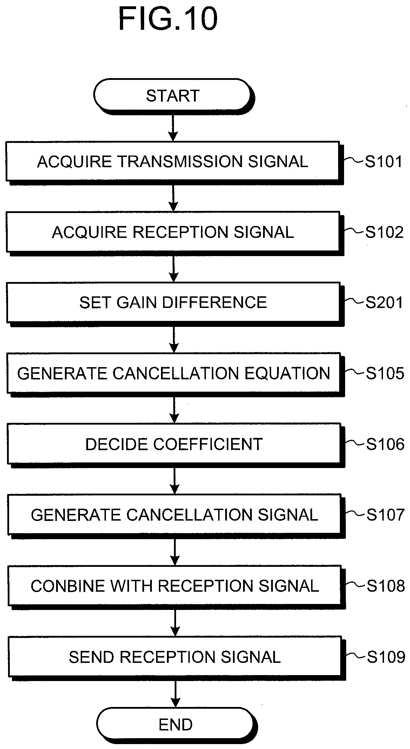

In the following, the distortion cancellation process performed by the cancellation device 200 configured described above will be described with reference to the flowchart illustrated in FIG. 10. In FIG. 10, components having the same configuration as those illustrated in FIG. 5 are assigned the same reference numerals. The distortion cancellation process described below is mainly performed by the processor 220 in the cancellation device 200.

The transmission signals Tx1, Tx2, Tx3, and Tx4 transmitted from the BBU 100 are acquired by the transmission signal acquiring unit 221 in the processor 220 via the interface 210 (Step S101). In contrast, the reception signals received by the RRHs 300-1 and 300-2 are acquired by the reception signal acquiring unit 223 in the processor 220 via the interface 240 (Step S102). The intermodulation signal due to intermodulation of each of the transmission signals Tx1 and Tx2 is added to the reception signals in the RRHs 300-1 and 300-2.

If the transmission signals and the reception signals are acquired, the known gain difference between the transmission signals Tx1 and Tx2 is acquired by the gain difference setting unit 401 and the gain difference is set in each of the transmission signals (Step S201). The transmission signals in each of which the gain difference is set is notified to the cancellation equation generating unit 228.

Then, the cancellation Equation using the transmission signals in each of which the gain difference is set is generated by the cancellation equation generating unit 228 (Step S105). Namely, Equation (3) is generated by the cancellation equation generating unit 228. Then, the method of least squares, correlation detection, or the like using, for example, the reception signals is performed by the coefficient deciding unit 229, whereby the coefficients in the cancellation Equation are decided (Step S106). Here, the coefficients $S_3$, $S_5$, and $S_7$ in Equation (3) above are decided by the coefficient deciding unit 229.

If the coefficients are decided, because the cancellation signal can be generated from the transmission signals by using the cancellation Equation, the cancellation signal is generated by the cancellation equation generating unit 228 (Step S107), and is output to the combining unit 224. Then, the cancellation signal is combined with the reception signal by the combining unit 224 (Step S108), whereby the intermodulation signal added to the reception signal is canceled. The reception signal in which the intermodulation signal has been canceled is sent to the BBU 100 via the interface 210 by the reception signal sending unit 225 (Step S109).

As described above, according to the embodiment, if the gain difference between the transmission signals, in the transmission path, to the distortion generation source in which the intermodulation signal is generated is known, a cancellation Equation is generated by setting the known gain difference in the transmission signal. Consequently, when a cancellation Equation is generated, calculating a gain difference using a correlation value is not performed and thus an unneeded arithmetic operation can be omitted.


[d] Fourth Embodiment


The characteristic of a fourth embodiment is that, after the gain difference between the transmission signals has been decided on the basis of the correlation value between the inter modulation distortion component and the reception signal, the subject gain difference is adjusted such that the cancellation gain becomes the maximum.

The configuration of each of the radio communication system and the cancellation device according to a fourth embodiment is the same as that described in the first embodiment (FIG. 1); therefore, the descriptions thereof will be omitted. In the fourth embodiment, the function of the processor 220 in the cancellation device is different from that described in the first embodiment.

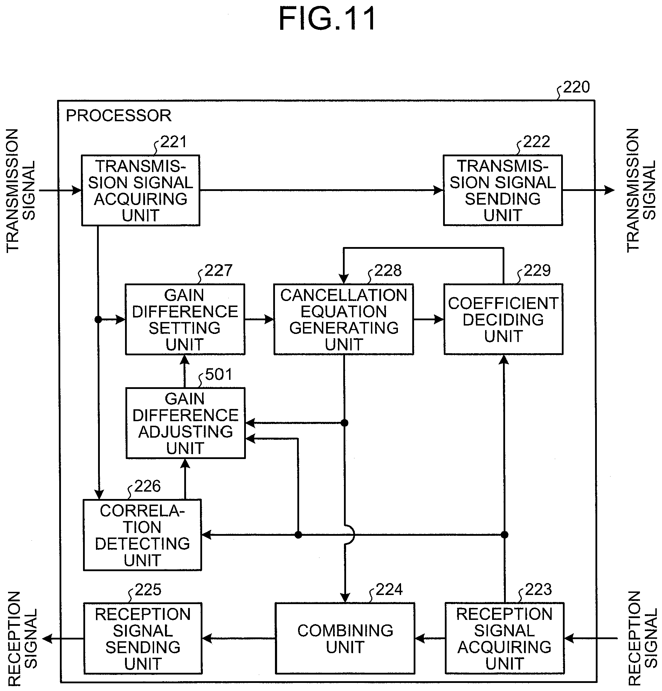

FIG. 11 is a block diagram illustrating the function of the processor 220 according to a fourth embodiment. In FIG. 11, components having the same configuration as those illustrated in FIG. 3 are assigned the same reference numerals and descriptions thereof will be omitted. In the processor 220 illustrated in FIG. 11, a gain difference adjusting unit 501 is added to the processor 220 illustrated in FIG. 3.

If the gain difference between the transmission signals is obtained by the correlation detecting unit 226, the gain difference adjusting unit 501 sets, as the initial value, the subject gain difference in the transmission signal in the gain difference setting unit 227. Then, the gain difference adjusting unit 501 acquires the cancellation signal to be output from the cancellation equation generating unit 228 and calculates the cancellation gain due to the subject cancellation signal. Then, the gain difference adjusting unit 501 changes the gain difference by a predetermined value and sets the gain difference in the transmission signal in the gain difference setting unit 227. Then, after the gain difference has been changed, the gain difference adjusting unit 501 acquires the cancellation signal output from the cancellation equation generating unit 228 and calculates the cancellation gain of this cancellation signal.

The gain difference adjusting unit 501 compares the cancellation gains before and after the gain difference is changed and changes the gain difference, which is to be set between the transmission signals, by a predetermined value such that the cancellation gain becomes the maximum. Finally, the gain difference adjusting unit 501 sets the gain difference that maximizes the cancellation gain in each of the transmission signals in the gain difference setting unit 227.

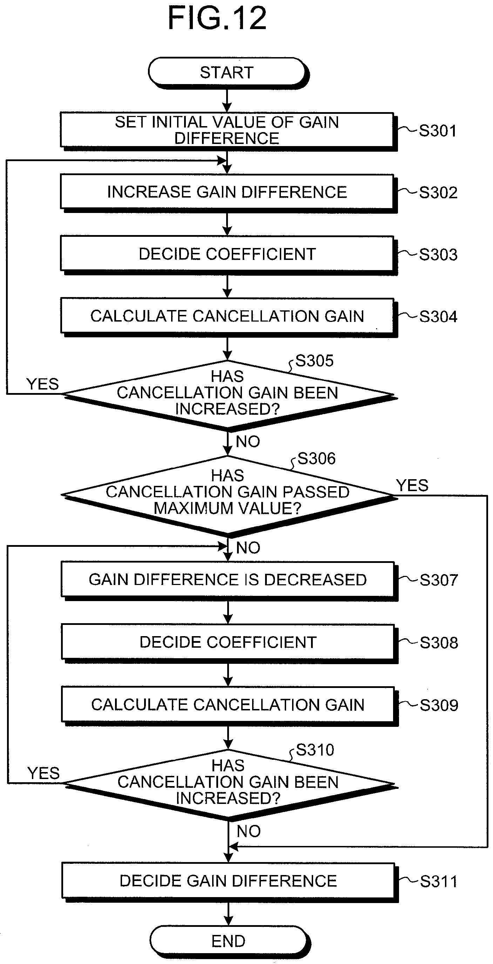

In the following, the gain difference adjusting process performed by the gain difference adjusting unit 501 described above will be described with reference to the flowchart illustrated in FIG. 12.

First, similarly to the first embodiment, the correlation value between the inter modulation distortion component and the reception signal is calculated by the correlation detecting unit 226 and the ratio of the correlation values is taken, whereby the gain difference between the transmission signals is obtained. This gain difference is notified to the gain difference adjusting unit 501 and the gain difference notified by the gain difference adjusting unit 501 is set as the initial value (Step S301). Namely, the gain difference notified from the correlation detecting unit 226 is multiplied by each of the transmission signals in the gain difference setting unit 227. Then, a cancellation Equation and its coefficients are decided by the cancellation equation generating unit 228 and the coefficient deciding unit 229 and the cancellation signal is output from the cancellation equation generating unit 228.

The cancellation signal is acquired by the gain difference adjusting unit 501 and the cancellation gain is calculated from both the cancellation signal and the reception signal. Specifically, the correlation value between the cancellation signal and the reception signal is calculated by the gain difference adjusting unit 501 and the calculated correlation value is set as the cancellation gain. Furthermore, the cancellation signal may also be combined with the reception signal by the gain difference adjusting unit 501, an electrical power difference between the reception signals before and after the cancellation signal may also be combined with the reception signal, and the obtained electrical power difference may also be set as the cancellation gain. If an uplink signal that is transmitted from, for example, a radio terminal device is included in the reception signal in the RRH 300-1, the correlation value is preferably used as the cancellation gain. In contrast, if an uplink signal that is transmitted from, for example, a radio terminal device is not included in the reception signal in the RRH 300-1 but noise is included, the electrical power difference is preferably used as the cancellation gain. Regarding both the cancellation gains, it is indicated that the intermodulation signal is effectively canceled by the cancellation signal as the cancellation gain is greater.

When the cancellation gain in the state in which the initial value of the gain difference is set is calculated, the amplitude component of the gain difference is increased by a predetermined value by the gain difference adjusting unit 501 (Step S302). Namely, the gain difference in which the amplitude component is increased by the predetermined value is notified to the gain difference setting unit 227 and is multiplied by the transmission signal. Then, a cancellation Equation and its coefficients are decided by both the cancellation equation generating unit 228 and the coefficient deciding unit 229 (Step S303) and the cancellation signal is output from the cancellation equation generating unit 228.

The cancellation signal after the gain difference has been increased is acquired by the gain difference adjusting unit 501 and the cancellation gain is calculated from both the cancellation signal and the reception signal (Step S304). Then, the calculated cancellation gain is compared with the cancellation gain that is in the state in which the gain difference is set to the initial value and it is determined whether the cancellation gain has been increased (Step S305). If the determination result indicates that the cancellation gain has been increased (Yes at Step S305), the amplitude component of the gain difference is further increased by the predetermined value (Step S302). Subsequently, during the time for which the cancellation gain is being increased, the amplitude component of the gain difference is being increased by each predetermined value.

In contrast, if the cancellation gain is not increased when compared with the cancellation gain that is in the state in which the initial value of the gain difference is set or when compared with the cancellation gain last time (No at Step S305), it is determined, by the gain difference adjusting unit 501, whether the cancellation gain has passed the maximum value and has shifted to a decrease (Step S306). Namely, if the cancellation gain is increased when the gain difference is increased last time and if the cancellation gain is decreased when the gain difference is increased this time, it is conceivable that the cancellation gain reaches the maximum value due to an increase in the gain difference. Thus, if it is determined that the cancellation gain has passed the maximum value and has shifted to a decrease (Yes at Step S306), it is decided that the gain difference when the cancellation gain becomes the maximum is the optimum gain difference (Step S311).

Furthermore, if it is determined that the cancellation gain does not pass the maximum value without increasing the cancellation gain from the cancellation gain in the state in which the initial value of the gain difference is set (No at Step S306), the amplitude component of the gain difference is decreased by the predetermined value by the gain difference adjusting unit 501 (Step S307). Namely, the gain difference in which the amplitude component is decreased by the predetermined value is notified to the gain difference setting unit 227 and is multiplied by the transmission signal. Then, a cancellation Equation and its coefficients are decided by the cancellation equation generating unit 228 and the coefficient deciding unit 229 (Step S308), and the cancellation signal is output from the cancellation equation generating unit 228.

The cancellation signal after the gain difference has been decreased is acquired by the gain difference adjusting unit 501 and the cancellation gain is calculated from the cancellation signal and the reception signal (Step S309). Then, the calculated cancellation gain is compared with the cancellation gain that is in the state in which the gain difference is set to the initial value and it is determined whether the cancellation gain has been increased (Step S310). If the determination result indicates that the cancellation gain has been increased (Yes at Step S310), the amplitude component of the gain difference is further decreased by the predetermined value (Step S307). Subsequently, during the time period for which the cancellation gain is being increased, the amplitude component of the gain difference is being increased by each predetermined value.

Then, if the cancellation gain is not increased any more even if the gain difference is made to decrease (No at Step S310), it is conceivable that the cancellation gain reaches the maximum value due to a decrease in the gain difference last time. Thus, it is decided that the gain difference when the cancellation gain becomes the maximum is the optimum gain difference (Step S311). In this way, if the optimum gain difference is decided by increasing and decreasing the amplitude component, the same process as that performed on the amplitude component is also performed on the phase component of the gain difference.

Consequently, the optimum gain difference that maximizes the cancellation gain is decided and, even if the accuracy of the initial value of the gain difference calculated by the correlation detecting unit 226 is low, it is possible to generate the cancellation signal with high accuracy.

As described above, according to the embodiment, the initial value of the gain difference between the transmission signals is calculated from correlation detection between the inter modulation distortion component and the reception signal and the gain difference is adjusted such that the cancellation gain due to the cancellation signal becomes the maximum. Consequently, even if the accuracy of the initial value of the gain difference is low, it is possible to maximize the cancellation gain and it is possible to accurately cancel the intermodulation signal that is added to the reception signal.

Furthermore, in each of the embodiments described above, it is assumed that the distortion cancellation process is performed by the processor 220 in the cancellation device 200; however, the cancellation device 200 does not always need to be arranged as an independent device. Namely, the function of the processor 220 in the cancellation device 200 may also be included in, for example, the processor 110 in the BBU 100. Furthermore, the processor having the same function as that of the processor 220 may also be included in each of the RRH 300-1 or the RRH 300-2.

The distortion cancellation process described in each of the embodiments may also be described as a program that can be executed by a computer. In this case, this program can be stored in a computer readable recording medium and can be introduced to the computer. An example of the computer readable recording medium includes a portable recording medium, such as a CD-ROM, a DVD disk, a USB memory, or the like, or a semiconductor memory, such as a flash memory, or the like.

According to an aspect of an embodiment of the distortion cancellation device and the distortion cancellation method disclosed in the present invention, an advantage is provided in that it is possible to reduce an increase in the amount of an arithmetic processing and decrease the size of the circuit.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

**Claims**

1. A distortion cancellation device (200) comprising:

   a first acquiring unit (210) that acquires a plurality of transmission signals that are wirelessly transmitted at different frequencies;

**EP 3 193 457 A1**

a second acquiring unit (240) that acquires a reception signal to which an intermodulation signal generated due to the plurality of the transmission signals is added; and

a processor (220) that executes a process including

acquiring a gain difference between the plurality of the transmission signals generated when the plurality of the transmission signals acquired by the first acquiring unit (210) is sent to a generation source of the intermodulation signal,

generating, by an arithmetic expression using both the acquired gain difference and the plurality of the transmission signals, a cancellation signal associated with the intermodulation signal, and

combining the generated cancellation signal with the reception signal acquired by the second acquiring unit (240).

2. The distortion cancellation device (200) according to claim 1, wherein the acquiring the gain difference includes calculating a correlation value between the reception signal and each of inter modulation distortion components that are calculated from the plurality of the transmission signals and that are based on an amplitude of each of the transmission signals, and

acquiring the gain difference between the plurality of the transmission signals from a ratio of the calculated correlation values.

3. The distortion cancellation device (200) according to any of claim 1 or 2, wherein the acquiring the gain difference includes adjusting the gain difference such that a cancellation gain that indicates a gain in which the intermodulation signal is canceled from the reception signal by the generated cancellation signal becomes the maximum.

4. The distortion cancellation device (200) according to any of claim 1 to 3, wherein the acquiring the gain difference includes acquiring a known gain difference that is previously stored.

5. The distortion cancellation device (200) according to any of claim 1 to 4, wherein the generating the cancellation signal includes selecting, from the plurality of the transmission signals, complex conjugates of the plurality of the transmission signals, and products of a predetermined coefficient and sizes of the plurality of the transmission signals, a transmission signal, a complex conjugate, and a product that are associated with a frequency of the intermodulation signal and generating the cancellation signal by performing multiplication and addition by using the selected transmission signal, the selected complex conjugate, and the selected product.

6. A distortion cancellation method comprising:

acquiring a plurality of transmission signals that are wirelessly transmitted at different frequencies;

acquiring a reception signal to which an intermodulation signal generated due to the plurality of the transmission signals is added;

acquiring a gain difference between the plurality of the transmission signals generated when the plurality of the acquired transmission signals is sent to a generation source of the intermodulation signal;

generating, by an arithmetic expression using both the acquired gain difference and the plurality of the transmission signals, a cancellation signal associated with the intermodulation signal; and

combining the generated cancellation signal with the reception signal.

FIG.1

# FIG.2

| NUMBER OF BANDS | ORDER OF DISTORTION | NUMBER OF COEFFICIENTS |
|---|---|---|
| 2 | THIRD ORDER | 1 |
| 2 | THIRD, AND FIFTH ORDER | 3 |
| 2 | THIRD, FIFTH, AND SEVENTH ORDER | 6 |
| 2 | THIRD, FIFTH, SEVENTH, AND NINTH ORDER | 10 |
| 2 | THIRD, FIFTH, SEVENTH, NINTH, AND ELEVENTH ORDER | 15 |

| NUMBER OF BANDS | ORDER OF DISTORTION | NUMBER OF COEFFICIENTS |
|---|---|---|
| 3 | THIRD ORDER | 1 |
| 3 | THIRD, AND FIFTH ORDER | 4 |
| 3 | THIRD, FIFTH, AND SEVENTH ORDER | 10 |
| 3 | THIRD, FIFTH, SEVENTH, AND NINTH ORDER | 20 |
| 3 | THIRD, FIFTH, SEVENTH, NINTH, AND ELEVENTH ORDER | 35 |

# FIG.3

PROCESSOR 220

TRANSMISSION SIGNAL → TRANSMISSION SIGNAL ACQUIRING UNIT 221

TRANSMISSION SIGNAL SENDING UNIT 222 → TRANSMISSION SIGNAL

GAIN DIFFERENCE SETTING UNIT 227 → CANCELLATION EQUATION GENERATING UNIT 228 → COEFFICIENT DECIDING UNIT 229

CORRELATION DETECTING UNIT 226

RECEPTION SIGNAL ← RECEPTION SIGNAL SENDING UNIT 225 ← COMBINING UNIT 224 ← RECEPTION SIGNAL ACQUIRING UNIT 223 ← RECEPTION SIGNAL

# FIG.4

EP 3 193 457 A1

# FIG.5

```
        ┌─────────────────┐
        │      START       │
        └─────────────────┘
                 │
                 ▼
  ┌──────────────────────────────┐
  │  ACQUIRE TRANSMISSION SIGNAL  │─S101
  └──────────────────────────────┘
                 │
                 ▼
  ┌──────────────────────────────┐
  │   ACQUIRE RECEPTION SIGNAL    │─S102
  └──────────────────────────────┘
                 │
                 ▼
  ┌──────────────────────────────┐
  │   CALCULATE GAIN DIFFERENCE   │─S103
  └──────────────────────────────┘
                 │
                 ▼
  ┌──────────────────────────────┐
  │      SET GAIN DIFFERENCE      │─S104
  └──────────────────────────────┘
                 │
                 ▼
  ┌──────────────────────────────┐
  │ GENERATE CANCELLATION EQUATION│─S105
  └──────────────────────────────┘
                 │
                 ▼
  ┌──────────────────────────────┐
  │       DECIDE COEFFICIENT      │─S106
  └──────────────────────────────┘
                 │
                 ▼
  ┌──────────────────────────────┐
  │  GENERATE CANCELLATION SIGNAL │─S107
  └──────────────────────────────┘
                 │
                 ▼
  ┌──────────────────────────────┐
  │  CONBINE WITH RECEPTION SIGNAL│─S108
  └──────────────────────────────┘
                 │
                 ▼
  ┌──────────────────────────────┐
  │      SEND RECEPTION SIGNAL    │─S109
  └──────────────────────────────┘
                 │
                 ▼
        ┌─────────────────┐
        │       END        │
        └─────────────────┘
```

# FIG.6

| NUMBER OF BANDS | ORDER OF DISTORTION | NUMBER OF COEFFICIENTS |
|---|---|---|
| 2 | THIRD ORDER | 1 |
| 2 | THIRD, AND FIFTH ORDER | 2 |
| 2 | THIRD, FIFTH, AND SEVENTH ORDER | 3 |
| 2 | THIRD, FIFTH, SEVENTH, AND NINTH ORDER | 4 |
| 2 | THIRD, FIFTH, SEVENTH, NINTH, AND ELEVENTH ORDER | 5 |

| NUMBER OF BANDS | ORDER OF DISTORTION | NUMBER OF COEFFICIENTS |
|---|---|---|
| 3 | THIRD ORDER | 1 |
| 3 | THIRD, AND FIFTH ORDER | 2 |
| 3 | THIRD, FIFTH, AND SEVENTH ORDER | 3 |
| 3 | THIRD, FIFTH, SEVENTH, AND NINTH ORDER | 4 |
| 3 | THIRD, FIFTH, SEVENTH, NINTH, AND ELEVENTH ORDER | 5 |

# FIG.7

EP 3 193 457 A1

# FIG.8

FIG.8

# FIG.9

```
                                                              ⌐220
┌──────────────────────────────────────────────────────────────────┐
│ PROCESSOR                                                          │
│                ⌐221                              ⌐222              │
│           ┌──────────────┐                  ┌──────────────┐       │
│           │ TRANSMIS-    │                  │ TRANSMIS-    │       │
│ ───────→  │ SION SIGNAL  │ ───────────────→ │ SION SIGNAL  │ ────→ │
│           │ ACQUIRING    │                  │ SENDING      │       │
│           │ UNIT         │                  │ UNIT         │       │
│           └──────────────┘                  └──────────────┘       │
│                  │                                                 │
│                  │         ⌐401         ⌐228         ⌐229          │
│                  │   ┌──────────┐  ┌──────────┐  ┌──────────┐      │
│                  │   │ GAIN     │  │CANCELLA- │  │COEFFICIENT│     │
│                  └─→ │DIFFERENCE│→ │TION      │→ │DECIDING  │      │
│                      │SETTING   │  │EQUATION  │  │UNIT      │      │
│                      │UNIT      │  │GENERATING│  │          │      │
│                      └──────────┘  │UNIT      │  └──────────┘      │
│                                    └──────────┘        ↑           │
│           ⌐225            ⌐224            │        ⌐223            │
│      ┌──────────┐   ┌──────────┐     │    ┌──────────┐            │
│      │RECEPTION │   │          │     │    │RECEPTION │            │
│ ←─── │SIGNAL    │ ← │COMBINING │ ← ──┘    │SIGNAL    │ ←───        │
│      │SENDING   │   │UNIT      │          │ACQUIRING │            │
│      │UNIT      │   │          │          │UNIT      │            │
│      └──────────┘   └──────────┘          └──────────┘            │
└──────────────────────────────────────────────────────────────────┘
```

# FIG.10

```
            ┌──────────────┐
            │    START     │
            └──────┬───────┘
                   ▼
┌────────────────────────────────────┐
│    ACQUIRE TRANSMISSION SIGNAL      │──S101
└────────────────┬───────────────────┘
                 ▼
┌────────────────────────────────────┐
│     ACQUIRE RECEPTION SIGNAL        │──S102
└────────────────┬───────────────────┘
                 ▼
┌────────────────────────────────────┐
│        SET GAIN DIFFERENCE          │──S201
└────────────────┬───────────────────┘
                 ▼
┌────────────────────────────────────┐
│   GENERATE CANCELLATION EQUATION    │──S105
└────────────────┬───────────────────┘
                 ▼
┌────────────────────────────────────┐
│         DECIDE COEFFICIENT          │──S106
└────────────────┬───────────────────┘
                 ▼
┌────────────────────────────────────┐
│    GENERATE CANCELLATION SIGNAL     │──S107
└────────────────┬───────────────────┘
                 ▼
┌────────────────────────────────────┐
│     CONBINE WITH RECEPTION SIGNAL   │──S108
└────────────────┬───────────────────┘
                 ▼
┌────────────────────────────────────┐
│       SEND RECEPTION SIGNAL         │──S109
└────────────────┬───────────────────┘
                 ▼
            ┌──────────────┐
            │     END      │
            └──────────────┘
```

# FIG.11

# FIG.12

START

SET INITIAL VALUE OF GAIN DIFFERENCE ~S301

INCREASE GAIN DIFFERENCE ~S302

DECIDE COEFFICIENT ~S303

CALCULATE CANCELLATION GAIN ~S304

HAS CANCELLATION GAIN BEEN INCREASED? ⌠S305 — YES

NO

HAS CANCELLATION GAIN PASSED MAXIMUM VALUE? ⌠S306 — YES

NO

GAIN DIFFERENCE IS DECREASED ~S307

DECIDE COEFFICIENT ~S308

CALCULATE CANCELLATION GAIN ~S309

HAS CANCELLATION GAIN BEEN INCREASED? ⌠S310 — YES

NO

DECIDE GAIN DIFFERENCE ~S311

END

Europäisches
Patentamt

European
Patent Office

Office européen
des brevets

## EUROPEAN SEARCH REPORT

Application Number

EP 17 15 0680

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2015/111515 A1 (SU YOUPING [CN] ET AL) 23 April 2015 (2015-04-23) * paragraph [0020] - paragraph [0051] * * figures 1-5 * ----- | 1-6 | INV. H04B1/525 H04B1/12 |
| A | US 2014/161159 A1 (BLACK GREGORY R [US] ET AL) 12 June 2014 (2014-06-12) * paragraph [0003] - paragraph [0005] * * paragraph [0019] - paragraph [0047] * * figures 2-7 * ----- | 1-6 | |

TECHNICAL FIELDS
SEARCHED      (IPC)

H04B

The present search report has been drawn up for all claims

| Place of search | Date of completion of the search | Examiner |
|---|---|---|
| Munich | 19 May 2017 | Patrovsky, Andreas |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 17 15 0680

This annex lists the patent family members relating to the patent documents cited in the above-mentioned European search report.
The members are as contained in the European Patent Office EDP file on
The European Patent Office is in no way liable for these particulars which are merely given for the purpose of information.

19-05-2017

| Patent document cited in search report | | Publication date | Patent family member(s) | | Publication date |
|---|---|---|---|---|---|
| US 2015111515 | A1 | 23-04-2015 | CN | 104335493 A | 04-02-2015 |
| | | | EP | 2856656 A1 | 08-04-2015 |
| | | | US | 2015111515 A1 | 23-04-2015 |
| | | | WO | 2013176590 A1 | 28-11-2013 |
| US 2014161159 | A1 | 12-06-2014 | CN | 104871433 A | 26-08-2015 |
| | | | EP | 2932605 A1 | 21-10-2015 |
| | | | KR | 20150132077 A | 25-11-2015 |
| | | | US | 2014161159 A1 | 12-06-2014 |
| | | | WO | 2014093012 A1 | 19-06-2014 |

EPO FORM P0459

For more details about this annex : see Official Journal of the European Patent Office, No. 12/82

**EP 3 193 457 A1**

**REFERENCES CITED IN THE DESCRIPTION**

**Patent documents cited in the description**

- JP 2009526442 A